# EUROPÄISCHE PATENTSCHRIFT

(11) **EP 2 660 488 B1**
(45) Veröffentlichungstag und Bekanntmachung des Hinweises auf die Patenterteilung: **12.07.2017**
(21) Anmeldenummer: 12166816.4
(22) Anmeldetag: 04.05.2012
(51) Int. Cl.: F16D 41/07, F16D 41/067

(54) **Klemmkörperfreilauf und Klemmkörperkäfig für diesen**
Clamp body free wheel and clamp body cage for same
Roue libre de corps de serrage et cage de corps de serrage pour celle-ci

(43) Veröffentlichungstag der Anmeldung: 06.11.2013
(73) Patentinhaber: Paul Müller GmbH & Co. KG Unternehmensbeteiligungen, 90411 Nürnberg (DE)
(72) Erfinder: Elbacher, Manfred, 90411 Nürnberg (DE)
(74) Vertreter: Lösch, Christoph Ludwig Klaus

(56) Entgegenhaltungen:
- EP-A1- 1 138 969
- EP-A1- 1 167 801
- EP-A1- 2 199 643
- FR-A- 1 491 569
- GB-A- 1 129 078
- US-A- 3 019 873
- US-A1- 2005 274 585

## Beschreibung

Die Erfindung betrifft einen Klemmkörperfreilauf. Klemmkörperfreiläufe finden beispielsweise in Richtungskupplungen Anwendung, die in eine Richtung ein Drehmoment durch Kraftschluss übertragen bzw. abstützen und in der Gegenrichtung einen Leerlauf zulassen. Bei Klemmkörperfreiläufen befinden sich hierbei die Klemmkörper in der sog. Klemmstellung oder Klemmposition, wenn sie das Drehmoment kraftschlüssig, d.h. reibschlüssig, übertragen und in der sog. Freilaufstellung oder Freilaufposition, wenn sie Leerlauf zulassen.

Herkömmliche Klemmkörperfreiläufe weisen neben den Klemmkörpern unter anderem einen Klemmkörperkäfig, in den die Klemmkörper aufgenommen werden und metallische Federn auf, die die Klemmkörper mittels Federkraft in Position halten (sog. Anfedern der Klemmkörper). Derartige Klemmkörperfreiläufe bekannter Bauart bestehen daher aus mindestens drei verschiedenen Komponenten, was einen entsprechend hohen Fertigungsaufwand nach sich zieht. Ein gattungsgemäßer Klemmkörperfreilauf ist z.B. aus dem Dokument FR-A-1 491 569 (in Zusammenhang mit dem Dokument US-A-3 019 873) bekannt.

Aufgabe der vorliegenden Erfindung ist es, einen besonders einfach aufgebauten Klemmkörperfreilauf zur Verfügung zu stellen.

Diese Aufgabe wird für einen Klemmkörperfreilauf durch einen Klemmkörperfreilauf mit den Merkmalen des Patentanspruchs 1 gelöst. Vorteilhafte Ausführungsformen des Klemmkörperfreilaufs sind in den Unteransprüchen beschrieben.

Der erfindungsgemäße Klemmkörperfreilauf besitzt einen Innenring, einen koaxial zu diesem angeordneten Außenring, einen Klemmkörperkäfig, welcher in einem Spalt zwischen dem Innenring und dem Außenring angeordnet ist, und eine Mehrzahl von Klemmkörpern, die in einer Klemmstellung eine reibschlüssige Verbindung mit dem Innenring und dem Außenring ausbilden und in einer Freilaufstellung eine Rotationsbewegung des Innenrings relativ zum Außenring erlauben. Der Klemmkörperkäfig weist entlang seines Umfangs äquidistant verteilte, axial verlaufende Stege sowie Taschen, in welchen jeweils einer der Klemmkörper aufgenommen ist, auf. Die Stege besitzen eine höhere Elastizität als die Klemmkörper. Ferner weisen die Stege eine Anfederfläche auf, welche ausschließlich in der Freilaufstellung von dem benachbart liegenden Klemmkörper kontaktiert wird. In der Klemmstellung hingegen wird die Anfederfläche nicht von dem benachbart liegenden Klemmkörper kontaktiert.

Durch die im Vergleich zu den Klemmkörpern höhere Elastizität der Stege des Klemmkörperkäfigs wirken diese als federnde Elemente. Daher können durch einen derartigen Aufbau die metallischen Federn entfallen, was zu einem besonders einfach aufgebauten und einfach zu fertigenden Klemmkörperfreilauf führt. Ferner besteht die Möglichkeit, durch die Wahl eines Werkstoffes für den Steg mit einer bestimmten Elastizität, das Anfederverhalten der Klemmkörper über einen weiten Bereich einzustellen.

Die Klemmkörper sind bevorzugt aus einem metallischen Material, z.B. aus einem Stahlwerkstoff, gefertigt. Entsprechend weisen die Stege dann eine Elastizität auf, die größer ist als die Elastizität von metallischen Werkstoffen. Gemäß der Erfindung sind die Stege jeweils im Wesentlichen quaderförmig und mit einem konvexen Querschnitt in axialer Richtung ausgebildet. Durch die Ausbildung der Stege als konvexe Körper ist eine kompakte Bauweise möglich, die widerstandsfähig gegenüber mechanischen Belastungen ist.

In vorteilhafter Weise ist der Kontakt zwischen Anfederfläche und dem benachbart liegenden Klemmkörper in der Freilaufstellung als Flächenkontakt ausgebildet. Auf diese Weise ist eine zuverlässige, reproduzierbare Anfederung des Klemmkörpers möglich. Außerdem wirkt die flächenhafte Kontaktierung des Klemmkörpers einer mechanischen Beschädigung des Steges-wie sie etwa bei einem punktuellen Kontakt zwischen Klemmkörper und Steg auftreten könnte - entgegen.

Ferner kann durch die Größe des Flächenkontaktes die Anfedereigenschaften beeinflusst werden. So steigt im Allgemeinen mit der Größe der Kontaktfläche die Anfederwirkung.

In einer weiteren vorteilhaften Ausführungsform ist derjenige Bereich der Oberfläche des Klemmkörpers, der in der Freilaufstellung die Anfederfläche kontaktiert, als eine zur Anfederfläche korrespondierende Fläche ausgebildet. Mit anderen Worten besitzt der oben genannten Oberflächenbereich des Klemmkörpers ein Krümmung bzw. Form, die einem negativen Abbild der Krümmung/Form der Anfederfläche entspricht. Auf diese Weise ist in der Freilaufstellung ein Flächenkontakt zwischen der Anfederfläche und dem Klemmkörper möglich. Gemäß der Erfindung weisen die Stege im Anschluss an die Anfederfläche eine axial verlaufende Stufe oder Nut auf. Dadurch wird die Anfederfläche exponiert und kann die Federwirkung übernehmen, ohne den Klemmkörperkäfig zu deformieren. Die Stufe bzw. Nut erhöht somit die Federwirkung der Anfederfläche.

In vorteilhafter Weise sind die Klemmkörper formschlüssig, insbesondere in Art einer Rast- oder Schnappverbindung, in den Taschen aufgenommen. Dadurch ist zum einen eine leichte Montage bzw. Demontage des Klemmkörperfreilaufs möglich, zum anderen kann eine sichere Lagerung der Klemmkörper erreicht werden.

In einer vorteilhaften Ausführungsform bestehen die Stege zumindest teilweise, insbesondere im Bereich der Anfederfläche, aus einem Werkstoff mit einer im Vergleich zum Werkstoff des restlichen Klemmköperkäfigs höheren Elastizität. Auf diese Weise kann die Anfederwirkung auf die Stege, insbesondere auf den Bereich der Anfederfläche, konzentriert werden. Die restlichen Bereiche des Klemmkörperkäfigs bestehen hingegen aus einem Werkstoff mit relativ geringer Elastizität, sodass die Formstabilität des Gesamtkäfigs gewährleistet ist.

In einer vorteilhaften Ausführungsform bestehen zumindest die Stege aus einem Polymerwerkstoff, insbesondere aus einem Polyamid. In bevorzugter Weise enthält der Polymerwerkstoff Füllstoffe, insbesondere in Form von Fasern und/oder Kugeln. In besonderer Weise eignet sich als Werkstoff für die Stege glasfaserverstärktes Polyamid, besonders bevorzugt PA 66 GF 25 (Polyamid 66 mit 25% Glasfaseranteil). Es können sowohl nur die Stege als auch der gesamte Klemmkörperkäfig aus den oben genannten Werkstoffen bestehen. Durch die Verwendung der oben genannten Werkstoffe kann ein besonders vorteilhaftes Federverhalten der Stege erreicht werden. Ferner ist es möglich, durch die Auswahl des Werkstoffes und/oder das Mischungsverhältnis von polymerer Grundmasse zu Füllstoff die Elastizität und das Federverhalten der Stege anzupassen.

Der erfindungsgemäße Klemmkörperkäfig weist entlang seines Umfangs äquidistant verteilte, axial verlaufende Stege sowie Taschen, in welchen jeweils ein Klemmkörper aufgenommen werden kann, auf. Die Stege weisen eine Anfederfläche auf, welche in der Freilaufstellung von einem in die benachbart liegende Tasche aufgenommenen Klemmkörper kontaktiert werden kann.

Die Erfindung ist anhand von Ausführungsbeispielen in den Zeichnungsfiguren weiter erläutert. Es zeigen:
- Fig. 1: einen Ausschnitt aus einer Schnittdarstellung eines Klemmkörperfreilaufs;
- Fig. 2: eine perspektivische Ansicht eines Klemmkörperkäfigs;
- Fig. 3: eine Schnittansicht des Klemmkörperkäfigs aus Fig. 2;
- Fig. 4: einen vergrößerten Ausschnitt aus Fig. 3;
- Fig. 5: einen Ausschnitt aus einer Schnittdarstellung eines weiteren Klemmkörperkäfigs.

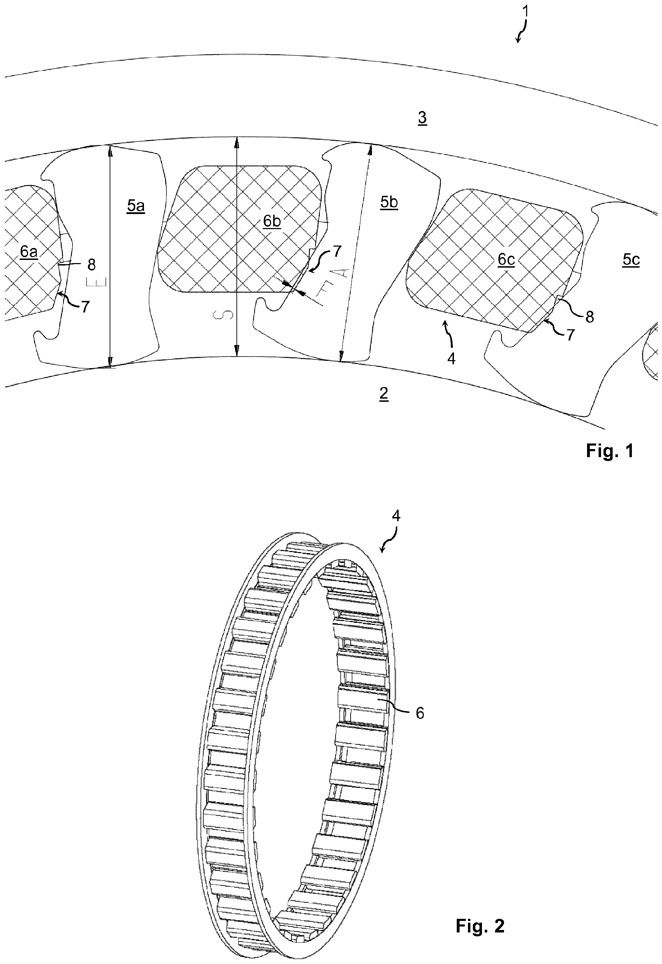

Fig. 1 zeigt einen Ausschnitt aus einer Schnittdarstellung eines Klemmkörperfreilaufs 1. Der Klemmkörperfreilauf 1 weist einen Innenring 2 und einen Außenring 3 auf. Der Außenring 3 ist koaxial zum Innenring 2 angeordnet. Zwischen dem Innenring 2 und dem Außenring 3 bildet sich ein Spalt, dessen Spaltweite in Fig. 1 mit S bezeichnet ist. Innerhalb dieses Spaltes ist ein Klemmkörperkäfig 4 angeordnet. Der Klemmkörperkäfig 4 besitzt Taschen, in denen jeweils ein Klemmkörper 5a, 5b, 5c eingebracht ist. Dabei sind die Klemmkörper 5a, 5b, 5c formschlüssig, nämlich in Art einer Rast- oder Schnappverbindung, in die Taschen aufgenommen.

Die Klemmkörper 5a, 5b, 5c bilden in einer Klemmstellung eine reibschlüssige Verbindung mit dem Innenring 2 und dem Außenring 3 aus. In einer Freilaufstellung hingegen erlauben die Klemmkörper 5a, 5b, 5c eine Rotationsbewegung des Innenrings 2 relativ zum Außenring 3.

In Fig. 1 ist zum besseren Verständnis der Klemmkörper 5a in der Klemmstellung und der Klemmkörper 5b in der Feilaufstellung gezeigt. In Realität würden sich entweder sämtliche Klemmkörper 5a, 5b, 5c in Klemmstellung oder in Freilaufstellung befinden. Die Ausbildung des Reibschlusskontaktes in der Klemmstellung wird in Fig. 1 durch die Bezeichnung E symbolisiert, während die Freilaufstellung mit der Bezeichnung A versehen ist.

Die Taschen des Klemmkörperkäfigs 4, in denen die Klemmkörper 5a, 5b, 5c eingebracht sind, sind voneinander durch entlang des Umfangs des Klemmkörpers 4 äquidistant verteilte, axial verlaufende Stege 6a, 6b, 6c getrennt. Diese Stege 6a, 6b, 6c besitzen eine höhere Elastizität als die Klemmkörper 5a, 5b, 5c. Jeder Steg 6a, 6b, 6c weist eine Anfederfläche 7 auf. Diese Anfederfläche 7 wird in der Freilaufstellung von dem benachbart liegenden Klemmkörper 5a, 5b, 5c kontaktiert. So wird in Fig. 1 die Anfederfläche 7 des Steges 6b von dem Klemmkörper 5b kontaktiert. Genauer bildet sich zwischen der Anfederfläche 7 des Steges 6b und dem benachbart liegenden Klemmkörper 5b in der Freilaufstellung ein Flächenkontakt (in Fig. 1 mit F bezeichnet) bzw. eine Überdeckung aus. Die Anfederfläche 7 des Steges 6a wird hingegen nicht vom Klemmkörper 5a kontaktiert, da dieser sich nicht in der Freilaufstellung, sondern in der Klemmstellung befindet.

Die Stege 6a, 6b, 6c sind jeweils im Wesentlichen quaderförmig ausgebildet und weisen in axialer Richtung einen Querschnitt auf, der eine axial verlaufende Stufe 8 aufweist. Diese Stufe 8 befindet sich im Anschluss an die Anfederfläche 7.

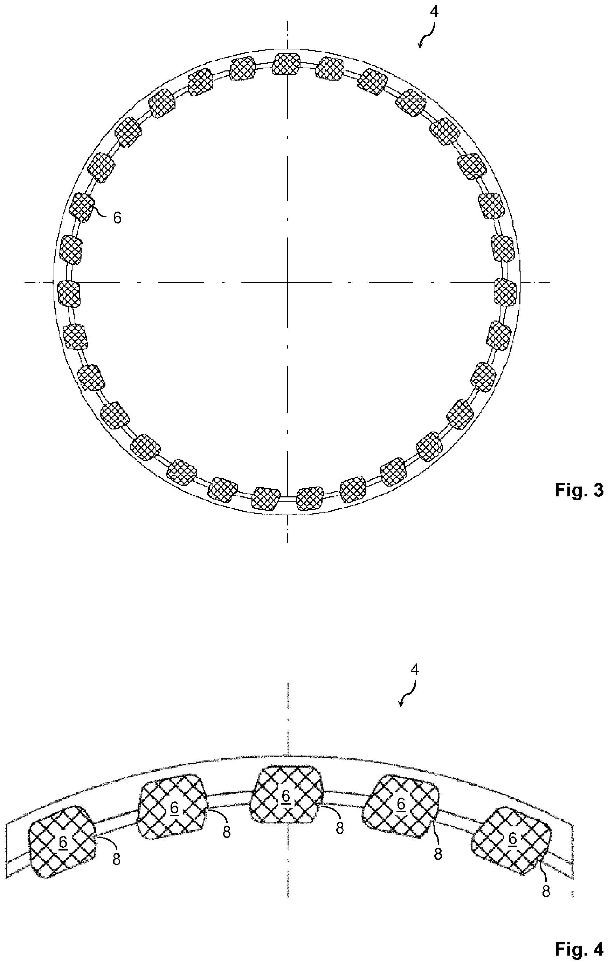

Fig. 2 zeigt eine perspektivische Ansicht des Klemmkörperkäfigs 4. Fig. 3 zeigt eine Schnittansicht des Klemmkörperkäfigs 4 aus Fig. 2. Der Klemmkörperkäfig 4 ist im Wesentlichen ringförmig ausgebildet und besitzt eine Vielzahl von äquidistant über den Umfang verteilten Stegen 6. Zwischen den Stegen 6 sind Taschen gebildet, in die die Klemmkörper 5 eingebracht werden können. Der in Fig. 2 und Fig. 3 dargestellte Klemmkörperkäfig 4 besteht aus einem glasfaserverstärkten Polyamid, nämlich aus PA 66 GF 25.

Fig. 4 zeigt einen vergrößerten Ausschnitt aus Fig. 3. Die dort gezeigten Stege 6 weisen jeweils eine Stufe 8 auf.

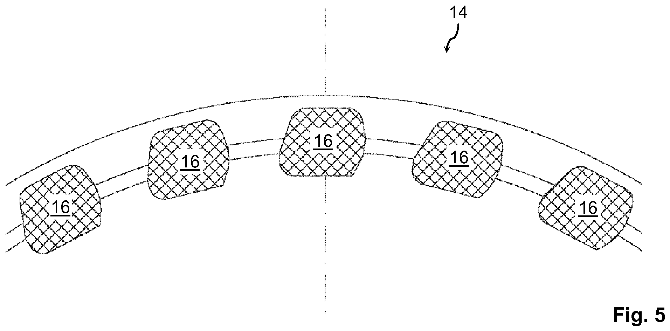

Fig. 5 einen Ausschnitt aus einer Schnittdarstellung eines weiteren Klemmkörperkäfigs 14. Der Klemmkörperkäfig 14 unterscheidet sich von dem in Fig. 1 bis Fig. 4 dargestellten Klemmkörperkäfig 4 in der Ausgestaltung der Stege. Während die Stege 6 des Klemmkörperkäfigs 4 eine axial verlaufende Stufe 8 im Anschluss an die Anfederfläche 7 aufweisen, fehlt diese Stufe 8 bei den Stegen 16 des Klemmkörperkäfigs 14. Vielmehr besitzen die Stege 16 in axialer Richtung gesehen einen konkaven Querschnitt ohne jegliche Ausbuchtung.

### BEZUGSZEICHENLISTE

- 1: Klemmkörperfreilauf
- 2: Innenring
- 3: Außenring
- 4: Klemmkörperkäfig
- 5: Klemmkörper
- 6: Steg
- 7: Anfederfläche
- 8: Stufe
- 14: Klemmkörperkäfig
- 16: Steg

## Patentansprüche

1. Klemmkörperfreilauf (1) mit einem Innenring (2), einem koaxial zu diesem angeordneten Außenring (3), einem Klemmkörperkäfig (4, 14), welcher in einem Spalt zwischen dem Innenring (2) und dem Außenring (3) angeordnet ist, und einer Mehrzahl von Klemmkörpern (5), die in einer Klemmstellung eine reibschlüssige Verbindung mit dem Innenring (2) und dem Außenring (3) ausbilden und in einer Freilaufstellung eine Rotationsbewegung des Innenrings (2) relativ zum Außenring (3) erlauben,
wobei der Klemmkörperkäfig (4, 14) entlang seines Umfangs äquidistant verteilte, axial verlaufende Stege (6, 16) sowie Taschen, in welchen jeweils einer der Klemmkörper (5) aufgenommen ist, aufweist, wobei die Stege (6, 16) eine höhere Elastizität als die Klemmkörper (5) besitzen, und
wobei die Stege (6, 16) eine Anfederfläche (7) aufweisen, welche ausschließlich in der Freilaufstellung von dem benachbart liegenden Klemmkörper (5) kontaktiert wird,
**dadurch gekennzeichnet, dass**
die Stege (6,16) jeweils im Wesentlichen quaderförmig und mit einem konvexen Querschnitt in axialer Richtung ausgebildet sind,
wobei die Stege (6,16) im Anschluss an die Anfederfläche (7) eine axial verlaufende Stufe (8) oder Nut aufweisen.

2. Klemmkörperfreilauf nach Anspruch 1, wobei der Kontakt zwischen Anfederfläche (7) und dem benachbart liegenden Klemmkörper (5) in der Freilaufstellung als Flächenkontakt ausgebildet ist.

3. Klemmkörperfreilauf nach einem der vorhergehenden Ansprüche, wobei derjenige Bereich der Oberfläche des Klemmkörpers (5), der in der Freilaufstellung die Anfederfläche (7) kontaktiert, und die Anfederfläche (7) als miteinander korrespondierende Flächen ausgebildet sind.

4. Klemmkörperfreilauf nach einem der vorhergehenden Ansprüche, wobei die Klemmkörper (5) formschlüssig, insbesondere in Art einer Rast- oder Schnappverbindung, in den Taschen aufgenommen sind.

5. Klemmkörperfreilauf nach einem der vorhergehenden Ansprüche, wobei zumindest die Stege (6, 16) aus einem Polymerwerkstoff, insbesondere aus einem Polyamid, bestehen.

6. Klemmkörperfreilauf nach Anspruch 5, wobei der Polymerwerkstoff Füllstoffe, insbesondere Fasern und/oder Kugeln, enthält.

7. Klemmkörperfreilauf nach einem der vorhergehenden Ansprüche, wobei die Stege (6, 16) aus einem glasfaserverstärkten Polyamid, insbesondere aus PA 66 GF 25, bestehen.

## Claims

1. Clamping body freewheeling feature (1) having an internal ring (2), an external ring (3) that is disposed so as to be coaxial with said internal ring (2), a clamping body cage (4, 14) which is disposed in a gap between the internal ring (2) and the external ring (3), and a plurality of clamping bodies (5) which in a clamping position configure a friction-fitting connection to the internal ring (2) and to the external ring (3) and in a freewheeling position allow a rotating movement of the internal ring (2) relative to the external ring (3),
wherein the clamping body cage (4, 14) along the circumference thereof has axially running webs (6, 16) that are distributed so as to be equidistant, and pockets in which in each case one of the clamping bodies (5) is received,
wherein the webs (6, 16) are of a higher elasticity than the clamping bodies (5), and wherein the webs (6, 16) have a resilient contact face (7) which exclusively in the freewheeling position is contacted by the clamping body (5) lying adjacent thereto,
**characterized in that**
the webs (6, 16) in each case are configured so as to be substantially ashlar shaped having a convex cross section in the axial direction,
wherein the webs (6, 16) contiguous to the resilient contact face (7) have an axially running step (8) or groove.

2. Clamping body freewheeling feature according to Claim 1, wherein the contact in the freewheeling position between the resilient contact face (7) and the clamping body (5) lying adjacent thereto is configured as a planar contact.

3. Clamping body freewheeling feature according to one of the preceding claims, wherein that region of the surface of the clamping body (5) that in the freewheeling position contacts the resilient contact face (7) and the resilient contact face (7) are configured as mutually communicating faces.

4. Clamping body freewheeling feature according to one of the preceding claims, wherein the clamping bodies (5) are received in the pockets in a form-fitting manner, in particular in the manner of a latching or a snap-fitting connection.

5. Clamping body freewheeling feature according to one of the preceding claims, wherein at least the webs (6, 16) are composed of a polymer material, in particular of a polyamide.

6. Clamping body freewheeling feature according to Claim 5, wherein the polymer material contains filler materials, in particular fibres and/or spheres.

7. Clamping body freewheeling feature according to one of the preceding claims, wherein the webs (6, 16) are composed of a glass-fibre reinforced polyamide, in particular of PA 66 GF 25.

## Revendications

1. Roue libre à corps de blocage (1) comprenant une bague interne (2), une bague externe (3) disposée coaxialement à celle-ci, une cage de corps de blocage (4, 14) qui est disposée dans une fente entre la bague interne (2) et la bague externe (3) et une pluralité de corps de blocage (5) qui, dans une position de blocage, établissent une liaison par engagement par friction avec la bague interne (2) et la bague externe (3) et qui permettent, dans une position de roue libre, un mouvement de rotation de la bague interne (2) par rapport à la bague externe (3),
la cage de corps de blocage (4, 14) présentant des entretoises (6, 16) s'étendant axialement, réparties de manière équidistante le long de sa périphérie ainsi que des poches dans lesquelles est à chaque fois reçu l'un des corps de blocage (5), les entretoises (6, 16) possédant une plus grande élasticité que les corps de blocage (5), et les entretoises (6, 16) présentant une surface faisant ressort (7) avec laquelle, exclusivement dans la position de roue libre, vient en contact le corps de blocage adjacent (5),
**caractérisée en ce que**
les entretoises (6, 16) sont à chaque fois réalisées essentiellement sous forme quadrilatérale et avec une section transversale convexe dans la direction axiale,
les entretoises (6, 16) présentant à la suite de la surface faisant ressort (7) un épaulement s'étendant axialement (8) ou une rainure.

2. Roue libre à corps de blocage selon la revendication 1, dans laquelle le contact entre la surface faisant ressort (7) et le corps de blocage adjacent (5) est réalisé dans la position de roue libre sous forme de contact de surface.

3. Roue libre à corps de blocage selon l'une quelconque des revendications précédentes, dans laquelle la région de la surface du corps de blocage (5) qui vient en contact avec la surface faisant ressort (7) dans la position de roue libre, et la surface faisant ressort (7), sont réalisées sous forme de surfaces se correspondant mutuellement.

4. Roue libre à corps de blocage selon l'une quelconque des revendications précédentes, dans laquelle les corps de blocage (5) sont reçus dans les poches par engagement par correspondance de formes, en particulier à la manière d'une liaison par encliquetage ou par emboîtement.

5. Roue libre à corps de blocage selon l'une quelconque des revendications précédentes, dans laquelle au moins les entretoises (6, 16) se composent d'un matériau polymère, en particulier d'un polyamide.

6. Roue libre à corps de blocage selon la revendication 5, dans laquelle le matériau polymère contient des charges, en particulier des fibres et/ou des billes.

7. Roue libre à corps de blocage selon l'une quelconque des revendications précédentes, dans laquelle les entretoises (6, 16) se composent d'un polyamide renforcé par des fibres de verre, en particulier de PA 66 GF 25.
